Europäisches Patentamt

European Patent Office

Office européen des brevets

(11) Publication number: **0 161 472**
A2

# EUROPEAN PATENT APPLICATION

(21) Application number: **85104179.8**

(22) Date of filing: **05.04.85**

(51) Int. Cl.⁴: **B 62 D 53/08**

(30) Priority: **16.05.84 IT 4157684**

(43) Date of publication of application: **21.11.85**
**Bulletin 85/47**

(84) Designated Contracting States: **AT BE CH DE FR GB LI LU NL SE**

(71) Applicant: **AUTOTRASPORTI PADOVA ATP S.p.A., Via Trieste 42, I-35100 Padova (IT)**

(72) Inventor: **Terranova, Guido, Via Monte Grande 32, I-35031 Abano Terme (IT)**

(74) Representative: **Modiano, Guido et al, MODIANO, JOSIF, PISANTY & STAUB Modiano & Associati Via Meravigli, 16, I-20123 Milan (IT)**

(54) Device for controlling the relative angle between two parts of a semitrailer vehicle.

(57) This device controls the relative angle between two parts of a semitrailer vehicle, particularly in the instance of a vehicle comprising a tractor (1) towing a semitrailer (4) connected to it by means of a vestibular swivel base (5), such as with large passenger transport road vehicles.

The device comprises a pair of pistons (13, 14) interconnecting the main frames of the parts or units (1, 4) which make up the vehicle, said pistons being located at the region of the swivel base symmetrically about the swivel axis thereof.

A steering angle detecting system (8, 9; 22–26) controls the front steering wheels of the tractor (1) and those of the semitrailer (4) which are also of the steering type, and on detecting that the steering angle of the semitrailer (4) exceeds the tractor (1) steering angle, activates the hydraulic circuit connecting the two pistons (13; 14) to prevent said angle from increasing.

0161472

## DEVICE FOR CONTROLLING THE RELATIVE ANGLE BETWEEN TWO PARTS OF A SEMITRAILER VEHICLE

The present invention relates to a device for controlling the relative angle between two parts of a semitrailer vehicle. More specifically, the invention is concerned with semitrailer vehicles comprising a tractor unit towing a semitrailer unit which may be a single-axle one bearing at the front on a vestibular swivel base fast with the tractor frame. Exemplary of such vehicles are large articulated buses.

The problem with such vehicles is that the semitrailer unit is of the auto-steering design, steering of the rear wheels being accomplished through a rod which is actuated from the swivel base region via suitable linkages.

In practice, the relative angle between the tractor unit longitudinal centerline and semitrailer longitudinal centerline is what determines the semitrailer steering conditions.

This prior arrangement has, however, a number of disadvantages in that, in the event of the semitrailer becoming misaligned, its steering action cannot be compensated for or controlled.

Actually, for a correct steering radius, all of the wheels on the same side of the vehicle must roll along one arc of a circle. If not, the semitrailer is not properly tracking the tractor.

However, where the semitrailer tracks along a wider circle than the tractor, no specially dangerous situation is created, but a dangerous situation does exist in the event of the semitrailer steering a narrower turn than the tractor, thereby producing misaligned thrust forces which act on the rear of the tractor unit, resulting in an uncontrollable side skid.

That effect is enhanced by the vehicle travelling on inherently slippery surfaces, such as a wet road surface, and is even more dangerous if the brakes of the vehicle are applied when travelling along a non-rectilinear path.

Also to be noted is that an uneven distribution of the payload may enhance such side skid effects on the vehicle, these effects would obviously be further aggravated as the speed, at which the vehicle is driven, is increased.

It is an object of the present invention to obviate such prior disadvantages affecting the operation of articulated vehicles as indicated.

Accordingly, it may be arranged to provide a device which can control the behavior of the semitrailer relatively to the tractor unit by acting on the angle of the semitrailer relative to the tractor vehicle.

The device should be capable of so affecting the semitrailer as to eliminate dangerous side skids in any travel conditions of the vehicle. Further, the device should be simple and easy to install even on vehicles not originally designed to incorporate it, easily engaged and disengaged by the vehicle driver, and of relatively low cost.

The aim is achieved by a device for controlling the relative angle between two parts making up an articulated vehicle, including a tractor unit pulling an auto-steering semitrailer through a connection swivel base, characterised in that it comprises a pair of pistons arranged symmetrically to the swivel base between the tractor and semitrailer, also provided being a surge tank for accommodating the varying volumes of fluid being displaced, connection circuits between the pistons and surge tank including shutter valves controlled by an electronic system for detecting the steering angle between the tractor and semitrailer, said shutter valves being operated when the angle between the semitrailer longitudinal direction and longitudinal directions of the semitrailer steering wheels has opposed sign value but a higher absolute value than the angle between the tractor longitudinal direction and longitudinal directions of the respective front wheels or when the two angles have the same sign.

Further features and advantages of the invention will be more clearly understood from the detailed description that follows of a preferred embodiment thereof, given herein by way of illustration and not of limitation with reference to the accompanying drawings, where:

Figure 1 is a plan view showing the vehicle diagramatically;

Figure 2 is a diagram of the hydraulic circuit and pistons which make up the device;

Figure 3 is an exemplary block diagram of the electric portion of the device;

Figure 4 is a top plan view showing digramatically a turning vehicle;

Figure 5 is a diagramatic top plan view of the vehicle as travelling in a straight line;

In Figure 6, A-F are top plan views of the variously displaced relative positions which the vehicle may assume.

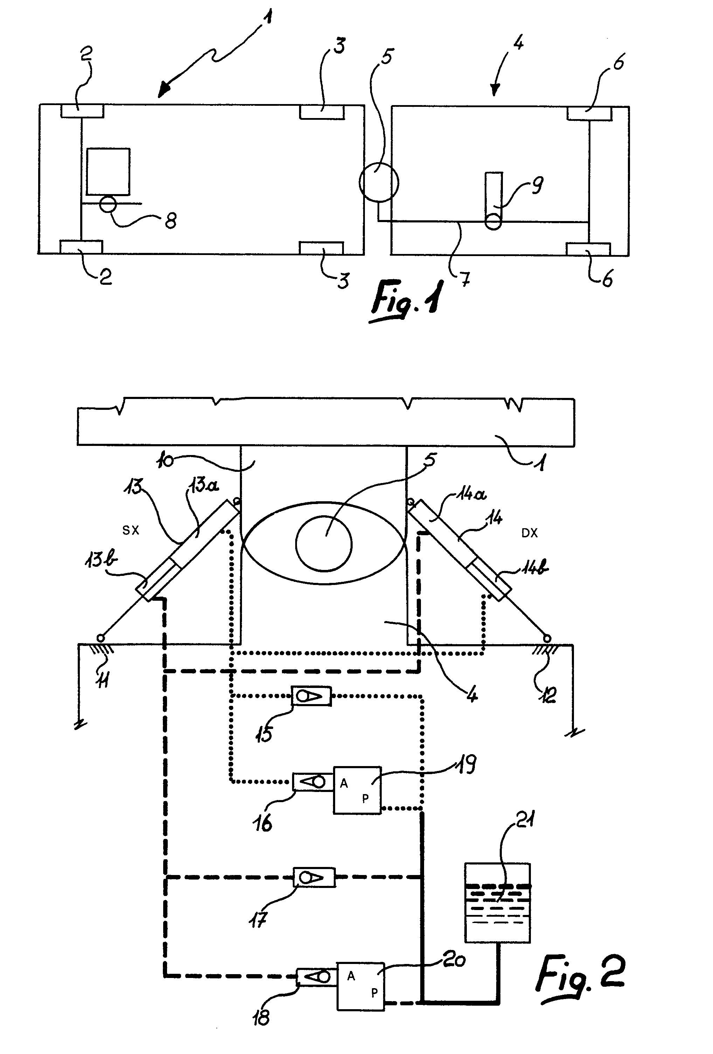

With reference to the cited drawing figures, a vehicle of a type incorporating the device of this invention is shown generally in Figure 1 and comprises essentially a tractor unit 1 having steerable front wheels 2 and drive rear wheels 3 pulling a semitrailer 4 mounted at the front to a swivel base 5 and having steerable rear wheels 6.

Steering of the rear wheels 6 of the semitrailer 4 is accomplished by means of an actuating rod 7 which is connected forwardly to the swivel base 5 and controls the rear wheels 6 through devices known per se.

Mounted on the steering system for the front wheels 2 of the tractor 1 is a first analogic transducer 8 for detecting angular position, which comprises a linear rotary potentiometer of high precision and reliability.

The potentiometer is mounted on a metal holder and is connected to a bevel reduction gear through a universal joint which will neutralise mechanical stresses due to any slight inaccuracies of mechanical assembly.

A second universal joint connects the bevel reduction gear to a control element.

Both the transducer and reduction gear are enclosed in a suitable sealed case, and a sealed manifold enables the potentiometer terminals to be connected to the control circuit.

A second transducer, indicated at 9, is mounted on the control rod 7 which steers the rear wheels 6 of the semitrailer 4.

Mounted between the main frame 10 of the tractor 1 and two points, respectively 11 and 12, on the main frame, not shown, of the semitrailer 4, are two double-acting pistons 13, 14, comprising a left hand double-acting piston 13 and a right hand double-acting piston 14 (Figure 2).

Said double-acting pistons 13, 14, each have two chambers (13a, 13b, 14a, 14b), which as diagramatically shown in Figure 2, are cross-connected to each other, the front chamber 13a of the piston 13 being connected to the rear chamber 14b of the piston 14, and likewise the rear chamber 13b of the piston 13 connected to the front chamber 14a of the piston 14.

Front and rear refer herein to the view in Figure 2 and the arrangement of the tractor 1 relatively to the semitrailer 4.

The circuit further comprises a one-way valve assembly, indicated at 15,16,17 and 18, as well as two solenoid valves 19 and 20 and a surge tank for the fluid, indicated at 21.

The attachment joints provided between the rod and cylinder of each piston and the main frame of the vehicle or of the semitrailer 4 are constructed as ball joints, so as to create no stresses even when the tractor and semitrailer assume different, and in particular non-aligned, planes.

The position of the piston rod relative to the piston cylinder is designed to allow for full rotation of the swivel base without utilizing the entire available travel length thereof, which would result in the rotation of the swivel base being inhibited.

As the steering angle exceeds a preset angle, such as may only occur in negotiating very tight corners at low speed, automatic limit devices will completely cut off the system because at that speed the correct movement of the vehicle is not endangered.

All of the cited electrical devices are of the safety type, i.e. conveniently including duplicate circuits.

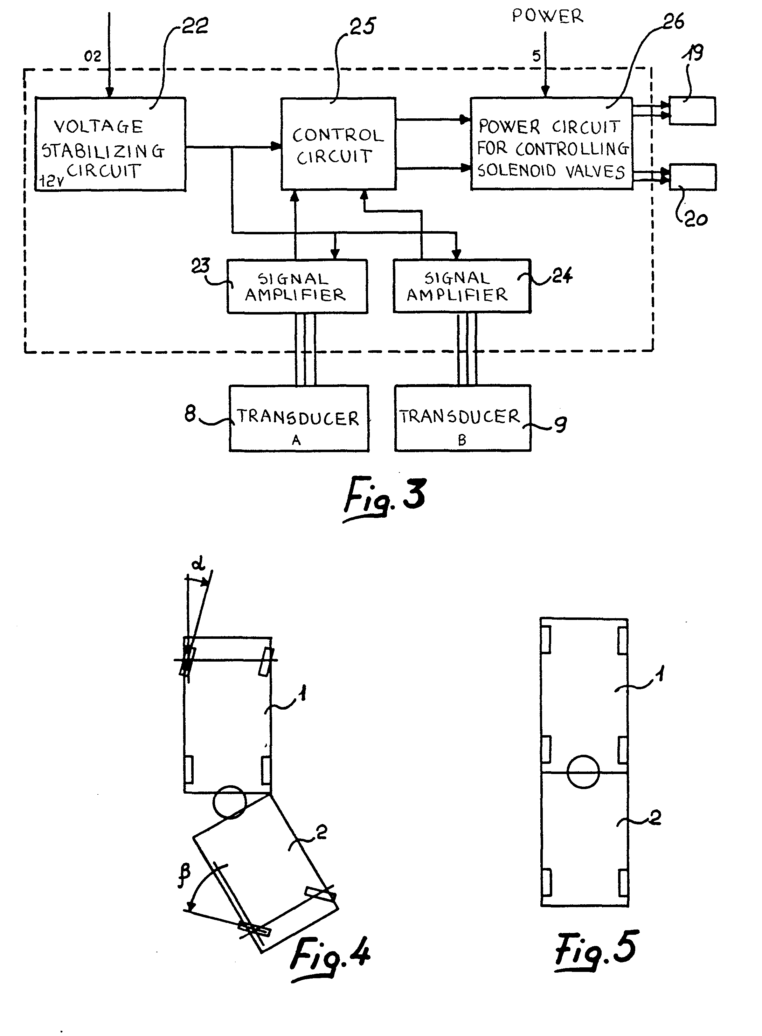

The block diagram for the electric portion is shown in Figure 3, where indicated at 8 and 9 are the previously discussed transducers, at 22 a voltage stabilising circuit for appropriately powering the electronic circuits, at 23 and 24 two signal amplifiers for the first 8 and second 9 transducers, at 25 the control circuit which performs comparation of the signals from the transducers, and at 26 the power circuit, which being driven by the control circuit drives in turn the solenoid valves 19 and 20.

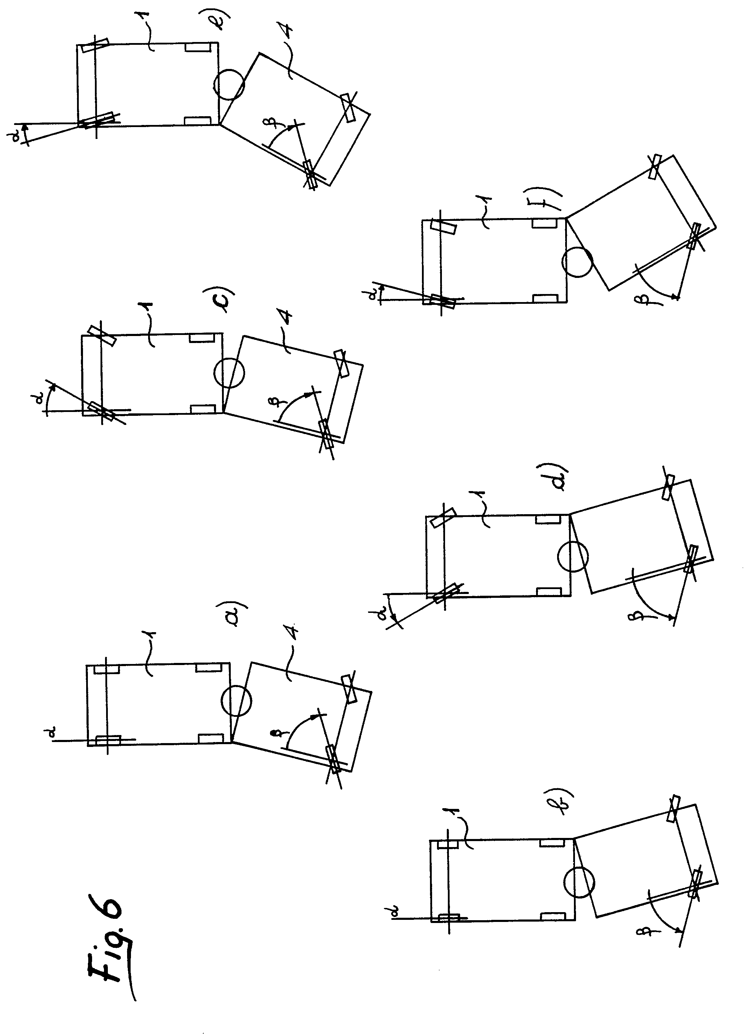

The control circuit is prearranged to read an output voltage from the transducers 8 and 9, as suitably amplified by the signal amplifiers 23, 24, such voltages being proportional to the values of the front steering angle $\alpha$ and rear steering angle $\beta$ (Figures 4,6).

The electronic circuit ascertains that the angle $\beta$ has, in the running condition, the opposite sign with respect to angle $\alpha$, and that the module value of the angle $\beta$ is at all times lower, or at the most equal to that of the angle $\alpha$.

In these conditions, the vehicle is in normal trim, and the solenoid valves are de-energised, thereby the semitrailer is allowed to move unrestricted relatively to the tractor.

This condition is shown, for example, in figure 5, where the vehicle is moving on a straight line and the tractor and semitrailer are aligned with respect to each other.

Outside of this condition, one of the conditions shown in Figure 6 may be encountered.

More particularly, Figure 6a illustrates the exemplary instance of the tractor being at a zero angle $\alpha$ and accordingly with its wheels straight, whereas the semitrailer is at an angle $\beta$ other than zero, and accordingly with its wheels steered.

The same condition is shown in Figure 6b, except that in this case the angular position is shifted to the right instead of to the left, as regards the semitrailer. In this case, the electronic circuit would lock the solenoid valves which correspond to that connection between two chambers of the two pistons in the flow direction that leads to enhancing this angular condition.

In practice, the pistons are put in a condition to inhibit enhancing of the angle while leaving unrestricted the capability for swinging in the opposite direction by the two vehicle parts, i.e. the vehicle is allowed to re-align itself.

In practice this means that in the case of Figure 6a, the valves 16 and 17 are opened and the valves 15 and 18 are closed to enable extension of the piston 13 and shortening of the piston 14, and vice versa in the instance of Figure 6b.

Figures 6c and 6d show a condition where the steering angles have the same sign, whilst Figures 6e and 6f show a condition where the angles have opposite signs, in which case the circuit will only operate when the absolute value of the angle $\beta$ is greater than the absolute value of the angle $\alpha$.

In practice, operation of the electronic circuit, which performs a sign and absolute value comparison of the two measured steering angles, always occurs in a manner which allows an operation that involves return of the semitrailer to normal trim.

Owing to the high sensitivity of the transducers employed, operation to block an increase in the undesired phenomenon occurs as soon as this appears, thus preventing it from assuming such an amplitude as to endanger the stability of the vehicle.

It will be appreciated from the foregoing that mechanical intervention on the vehicle involves no particular complications since it is reduced to installing a pair of pistons, connecting them hydraulically and positioning appropriate transducers on steering control devices of the tractor and semitrailer.

As mentioned above, the device is provided with a means of being completely by passed, these means being either automatic or formed by travel end stops which operate beyond a certain preset maximum steering angle, and manual or operated by the driver who can bypass the device for example to reverse the vehicle.

However, it is apparent, that in these conditions the vehicle has no particular safety problems since speeds are particularly reduced.

Tests carried out have ascertained that the device

0161472

behaves in an optimum fashion to both cancel the weaving effect of the semitrailer while running at a sustained speed, and maintain or even return, the semitrailer into trim in the event that it temporarily loses traction on the ground, or the brakes of the vehicle are applied when the tractor vehicle is out of alignment with the semitrailer.

Thus, a great advantage could be ascertained as regards comfort and driving safety, without practically intervening on the vehicle load bearing structure which remains the same in all cases.

Use of two double-acting pistons only and of a locking system of the hydraulic circuits by means of solenoid valves imparts considerable constructional simplicity and high reliability to the device.

Taking the steps from the same inventive concept it is clear that the device may be implemented as desired in accordance with the various vehicle types on which it may be installed.

All the hydraulic, electric, and electronic parts may be replaced by any equivalent parts, depending on contingent requirements.

Sizing will also be related to the type of vehicle on which the device will be installed and is not, accordingly, limitative.

CLAIMS

1. A device for controlling the relative angle between two parts making up an articulated vehicle, including a tractor unit pulling an auto-steering semitrailer through a connection swivel base, characterised in that it comprises a pair of pistons (13,14) arranged symmetrically to the swivel base (5) between the tractor (1) and semitrailer (4), also provided being a surge tank (21) for accommodating the varying volumes of fluid being displaced, connection circuits between the pistons and surge tank including shutter valves (15-18) controlled by an electronic system (8,9;22-26) for detecting the steering angle between the tractor and semitrailer, said shutter valves (15-18) being operated when the angle between the semitrailer (4) longitudinal direction and longitudinal directions of the semitrailer steering wheels has opposed sign value but a higher absolute value than the angle between the tractor longitudinal direction and longitudinal directions of the respective front wheels or when the two angles have the same sign.

2. A device according to Claim 1, characterised in that said pistons (13,14) are of the double-acting type and mounted such that the ends work, the one on the main frame (10) of the tractor (1) and the other on the main frame of the semitrailer (4).

3. A device according to Claim 1, characterised in that said pistons (13,14) have a sufficient stroke length to never use up their stroke length for any

relatire angles between the tractor and semitrailer.

4. A device according to the preceding claims, characterised in that said pistons (13,14) are connected to ball joints.

5. A device according to Claim 1, characterised in that the two chambers (13a,13b resp. 14a,14b) of each piston (13 resp. 14) are connected hydraulically to the chambers (14b,14a resp. 13b,13a) of the other piston (14 resp. 13) with cross connections.

6. A device according to Claim 1, characterised in that for each hydraulic connection between the chambers, there are provided a pair of one-way valves (15,16 resp. 17,18) and one high pressure shutter valve (18 resp. 19), said valves being controlled by an electronic control arrangement (25).

7. A device according to Claim 1, characterised in that said electronic arrangement comprises a pair of potentiometer transducers (8,9) respectively connected to the tractor (1) steering system and to the steering system for the semitrailer (4) rear wheels, said transducers being adapted to detect a signal proportional to said steering angles.

8. A device according to Claims 1 and 7, characterised in that it comprises comparator members (25) connected to said transducer pair (8,9) and being input with said steering angles to check their signs and the difference in absolute value of the detected angles.

9. A device according to Claim 1, characterised in that the control effects substantially the blocking

0161472

of that way of fluid flow between the two chambers of the two pistons in the direction which would enhance the phenomenon of increasing the difference in relative angle between the tractor and semitrailer.

10. A device according to Claim 1, characterised in that travel end stops are provided substantially mounted at the swivel base area (5) for disengagement of the device as the steering angle reaches a limit value, when the vehicle is moving at low speed.

11. A device according to Claim 1, characterised in that a manual bypass means is provided which may be operated by the driver.

0161472

_Fig.1_

_Fig.2_

0161472

**Fig. 3**

**Fig. 4**

**Fig. 5**

Fig. 6